# EUROPÄISCHE PATENTSCHRIFT

(11) **EP 3 891 950 B1**
(45) Veröffentlichungstag und Bekanntmachung des Hinweises auf die Patenterteilung: **29.01.2025**
(21) Anmeldenummer: 19813014.8
(22) Anmeldetag: 05.12.2019
(51) Int. Cl.: H04L 47/00

(54) **ROUTER MIT ANMELDUNGSFUNKTIONALITÄT UND HIERFÜR GEEIGNETES ZUGRIFFSKONTROLLVERFAHREN**
ROUTER WITH LOGIN FUNCTIONALITY AND ACCESS CONTROL METHOD SUITABLE THEREFOR
ROUTEUR À FONCTIONNALITÉ D'INSCRIPTION ET PROCÉDÉ DE CONTRÔLE D'ACCÈS DESTINÉ À CET EFFET

(30) Priorität: 06.12.2018 BE 201805857
(43) Veröffentlichungstag der Anmeldung: 13.10.2021
(73) Patentinhaber: PHOENIX CONTACT GMBH & CO. KG, 32825 Blomberg (DE)
(72) Erfinder: BOYSEN, Gerrit, 32760 Detmold (DE); HILGENKAMP, Ingo, 33397 Rietberg (DE); FUSS, Andreas, 10405 Berlin (DE)
(74) Vertreter: Blumbach · Zinngrebe Patentanwälte PartG mbB
(86) Internationale Anmeldenummer: PCT/EP2019/083783
(87) Internationale Veröffentlichungsnummer: WO 2020/115189

(56) Entgegenhaltungen:
- KR-B1- 101 723 957
- US-A1- 2016 087 942
- US-A1- 2018 220 476

## Beschreibung

Vorliegende Erfindung betrifft einen Router, der zwischen wenigstens zwei Kommunikations-, Anlagen- und/oder Rechnernetzen geschaltet ist und mit einer Anmeldungsfunktionalität ausgestattet und eingerichtet ist zur Anmeldung eines Nutzers, um diesen nach Eingabe von als zulässig erkannten Anmeldungsdaten Zugriff auf vorbestimmte Netzbereiche und/oder an diese angeschaltete Netzgeräte zu gewähren. Die Erfindung betrifft ferner ein, insbesondere für einen solchen Router geeignetes Zugriffskontrollverfahren.

Bekanntermaßen können Kommunikations-, Anlagen- und/oder Rechnernetze, im Rahmen der Erfindung auch allgemein als Netzwerke bezeichnet, an und für sich private Netze oder auch öffentliche Netze darstellen und jeweils für sich z.B. sogenannte LANs (Local Area Networks) oder WANs (Wide Area Networks) bilden, je nach Definition, sowie grundsätzlich technisch unterschiedlich aufgebaut sein. Netzwerke können folglich auch eine komplette Automatisierungsanlage, Produktionsanlage oder Büroumgebung abdecken oder auch Teilbereiche hiervon, bis hin zu einzelnen Netzzellen. Andere Beispielspiele sind z.B. Rechenzentren oder auch ein öffentliches Telefonnetz. Innerhalb eines Netzwerkes angeschaltete Netzgeräte können untereinander jedoch über ein gemeinsames Medium sowie Protokoll miteinander kommunizieren und/oder Daten austauschen sowie in der Regel auch eine Anzahl von Ressourcen gemeinsam nutzen. Im Falle von beispielsweise Automatisierungs- oder Produktionsanlagen kommunizieren die hierbei innerhalb eines Netzwerkes angeschalteten Netzteilnehmer beispielsweise über ein gemeinsames Ethernet-Netzwerk miteinander.

Um ein Kommunizieren und/oder einen Austausch von Daten über die Grenzen eines Netzes hinweg zu ermöglichen und/oder beispielsweise ein Netz mit dem Internet oder einem anderen Netzwerk zu verbinden, werden an den Außengrenzen eines Netzwerkes bekanntermaßen häufig Router eingesetzt, welcher ermöglicht, mehrere Netzwerke auch mit unterschiedlichen Protokollen bzw. Medien miteinander zu verbinden. Im Rahmen der Erfindung betrifft der Begriff Netz oder Netzwerk somit auch Teilbereiche eines solchen, bis hin zu einzelnen Netzzellen, an deren Außengrenzen dann jeweils ein Router eingesetzt ist. Ein Beispiel für einen solchen Router ist im Dokument US2016/087942, veröffentlicht am 24. Marz 2016, von Yaguchi Takamasa, dargestellt.

Ein Zugriff von außerhalb eines solchen Kommunikations-, Anlagen- und/oder Rechnernetzes auf dieses Netz oder auf zumindest vorbestimmte Netzbereiche und/oder daran angeschaltete Netzgeräte erfolgt somit üblicherweise über einen Router und wird in der Regel nur entsprechend autorisierten Nutzern gestattet. Derartige Nutzer können Personen sein, aber auch Netzgeräte anderer Netze. Solche Zugriffe von außerhalb sind beispielsweise auch bei Fernwartungs- und/oder Security-Anwendungen oftmals notwendig, wofür von extern ein bestimmter Nutzer auf zumindest vorbestimmte Netzbereiche oder daran angeschaltete Netzgeräte zugreifen muss. Um den Zugriff von extern auf solche Bereiche oder daran angeschaltete Netzgeräte für unbefugte Nutzer zu unterbinden, ist es deswegen im Regelfall erforderlich, zunächst entsprechende Anmeldungsdaten beim Router einzugeben bzw. diesem zu übergeben, um dann entsprechend der hinsichtlich der Anmeldungsdaten hinterlegten Zugriffsautorisierung dem Nutzer einen entsprechenden Zugriff auf das hinter dem Router befindliche Netz bzw. die daran angeschalteten und folglich durch den Router geschützten Netzbereiche und Netzgeräte zu gewähren. Für einen gewährten Zugriff kann dann beispielsweise auch der Aufbau eines entsprechenden VPN-Tunnels hin zu einem bestimmten Netzbereich und/oder Netzgerät durch den Router eingeleitet werden.

Aus der DE 10 2006 057 400 B4 ist eine Zugriffskontrollsteuerung für Zugriffscode-geschützte Administrator-verwaltete Datenquellen mit einem durch einen bekannten Zugriffscode geschützten Fernabfragemittel bekannt, wobei die Zugriffskontrollsteuerung ein Mittel besitzt, um die Fernabfrage mit einem als zulässig bekannten Zugriffscode temporär zu sperren. Hierzu wird der einem Nutzer bekannte Zugriffscode, der von der Zugriffskontrollsteuerung auch als zulässig bekannt ist, in einen stattdessen zu verwendenden, dem hinsichtlich seines Zugriffs zu sperrenden Nutzer jedoch nicht bekannten Substitutivcode geändert. Da der Substitutivcode den zulässigen Zugriffscode auch eines autorisierten Nutzers an der zu sperrenden Datenquelle ersetzt, müsste folglich auch der grundsätzlich autorisierte Nutzer bei temporärer Sperrung seines zulässigen Zugriffscodes, den ihm unbekannten Substitutivcode anstelle seines an und für sich zulässigen Zugriffscodes eingeben, um Zugriff gewährt zu bekommen.

Ein Nachteil hierbei ist, dass die Zugriffskontrollsteuerung weiterhin, d.h. auch bei temporär gesperrtem Zugriffscode, aktiv eine Prüfung des von einem Nutzer eingegebenen Zugriffscodes durchführen muss, d.h. einen Vergleich des eingegebenen Zugriffscodes mit dem zur temporären Sperrung ersetzen Substitutivcode.

Eine Aufgabe der Erfindung besteht daher darin, eine hohe Sicherheit gegen unerwünschte Fremdzugriffe von außen auf ein Netzwerk, auch für an und für sich autorisierte Nutzer bereitzustellen und insbesondere einen grundsätzlich möglichen Fremdzugriff zumindest temporär zu unterbinden, und zwar in einfacherer und insbesondere auch kapazitätsschonender Weise, insbesondere in Bezug auf die, die Prüfung und/oder Freigabe eines angefragten Zugriffs bewerkstelligenden Komponenten und Ressourcen.

Die Lösung der Erfindung ist bereits durch einen Router mit den Merkmalen nach Anspruch 1 sowie ein Zugriffskontrollverfahren mit den Merkmalen nach Anspruch 9 gegeben.

Die vorliegende Erfindung schlägt somit einen Router vor, bei welchem eine Anmeldungsfunktionalität zur Anmeldung eines Nutzers derart vorgesehen ist, diesem nach Eingabe von als zulässig erkannten Anmeldungsdaten Zugriff auf vorbestimmte Netzbereiche und/oder an diese angeschaltete Netzgeräte zu gewähren, dass am Router eine mit der Anmeldungsfunktionalität zusammenwirkende Aktivierungs-Deaktivierungseinrichtung vorgesehen ist zum temporären Aktivieren und/oder Deaktivieren einer zur Eingabe von Anmeldungsdaten durch den Nutzer erforderlichen Anmeldungsdaten-Eingabeeinrichtung.

Die Erfindung schlägt ferner ein Zugriffskontrollverfahren, insbesondere für einen solchen Router vor, bei welchem zur Kontrolle des Zugriffs das Eingeben von Anmeldungsdaten mittels einer Aktivierungs-/Deaktivierungseinrichtung temporär freigegeben und/oder gesperrt werden kann. Im Gegensatz zum vorstehend zitierten Stand der Technik, insbesondere der DE 10 2006 057 400 B4, muss somit unter Anwendung der erfindungsgemäßen Lösung keine Prüfung eines eingegebenen Codes bzw. von Anmeldungsdaten mehr stattfinden, wenn der Zugriff auf das Netzwerk temporär gesperrt werden soll, da in diesem Fall bereits die Eingaben von Anmeldungsdaten unterbunden ist. Die temporäre Sperrung eines Zugriffs auf das Netzwerk erfolgt somit, da keine aktive Prüfung auf Zulässigkeit von eingegebenen Anmeldungsdaten mehr stattfinden muss, durch eine wesentlich ressourcenschonendere Weise.

In Weiterbildung ist vorgesehen, dass vom Router im Rahmen der Anmeldungsfunktionalität ein über einen Desktop oder Browser aufrufbares Anmeldungsmenü als Anmeldungsdaten-Eingabeeinrichtung eingerichtet ist.

In besonders bevorzugter Weiterbildung ist daher von der Erfindung ferner vorgesehen, dass die Aktivierungs-/Deaktivierungseinrichtung zum temporären Deaktivieren der Anmeldungsdaten-Eingabeeinrichtung lediglich eine optische Anzeige des Anmeldungsmenüs unterbindet.

Entsprechend zeichnet sich ein besonders bevorzugtes Zugriffskontrollverfahren dadurch aus, dass das Eingeben der Anmeldungsdaten über einen Desktop oder ein Browser abrufbares Anmeldungsmenü erfolgt und durch Unterbinden einer optischen Anzeige dieses Anmeldungsmenüs gesperrt wird.

In ergänzender oder auch alternativer Weiterbildung ist jedoch auch zweckmäßig vorgesehen, dass die Anmeldungsfunktionalität bei temporär aktivierter Anmeldungsdaten-Eingabeeinrichtung zur automatisierten Eingabe von Anmeldungsdaten und/oder zum Einlesen der Anmeldungsdaten unter Nutzung von Scan- oder Sensoreinrichtungen eingerichtet ist.

In weiterer ergänzender oder alternativer Ausführung ist vorgesehen, dass die Aktivierungs-/Deaktivierungseinrichtung einen Schalter, insbesondere einen als Hardware oder als Software ausgebildeten Schalter besitzt.

So kann ein solcher Schalter in zweckmäßiger Weiterbildung, beispielsweise als Schlüsselschalter oder auch als HMI (Human Machine Interface)-Schaltfläche ausgebildet sein.

Gemäß einer weiteren ergänzenden oder alternativen Weiterbildung ist ferner vorgesehen, die Aktivierungs-/Deaktivierungseinrichtung in Zusammenwirken mit der Anmeldungsfunktionalität zum Bewirken einer Aktivierung und auch Deaktivierung der Anmeldungsdaten-Eingabeeinrichtung unabhängig von jeglicher aktivierten oder deaktivierten Kommunikationsverbindung einzurichten.

Weitere Vorteile und Merkmale der Erfindung ergeben sich aus der nachfolgenden Beschreibung einiger bevorzugter Ausführungsformen unter Bezugnahme auf die beigefügten Zeichnungen, welche zeigen:
- Fig. 1: in stark schematisierter Darstellung eine Teilansicht eines Routers mit einer ersten Ausführungsform einer erfindungsgemäßen Aktivierungs-/Deaktivierungseinrichtung,
- Fig. 2: in stark schematisierter Darstellung eine Teilansicht eines Routers mit einer zweiten Ausführungsform einer erfindungsgemäßen Aktivierungs-/Deaktivierungseinrichtung,
- Fig. 3: in stark schematisierter Darstellung eine Teilansicht eines Routers mit einer dritten Ausführungsform einer erfindungsgemäßen Aktivierungs-/Deaktivierungseinrichtung,
- Fig. 4: in stark schematisierter Darstellung eine Teilansicht eines Routers mit einer vierten Ausführungsform einer erfindungsgemäßen Aktivierungs-/Deaktivierungseinrichtung,
und
- Fig. 5: in stark vereinfachter Darstellung eine bevorzugte Ausführungsform eines erfindungsgemäßen Zugriffskontrollverfahrens.

Für die nachfolgende Beschreibung bevorzugter Ausführungsformen der Erfindung wird von einem Router ausgegangen, der zwischen wenigstens zwei Kommunikations-, Anlagen- und/oder Rechnernetzen geschaltet und mit einer Anmeldungsfunktionalität ausgestattet und eingerichtet ist, zur Anmeldung eines Nutzers, um diesen nach Eingabe von als zulässig erkannten Anmeldungsdaten Zugriff auf vorbestimmte Netzbereiche und/oder an diese angeschaltete Netzgeräte zu gewähren. Nach Zugriffsgewährung auf vorbestimmte Netzbereiche und/oder an diese angeschaltete Netzgeräte wird der Nutzer sodann in der Regel über eine Benutzerfirewall und basierend auf einem individuellen Regelwerk entsprechend weitergeleitet.

Beispielhaft sei angenommen, der zuvor notwendige Zugriff auf den, insbesondere von der Anmeldungsfunktionalität zur Verfügung gestellten Anmeldungsbereich bzw. die zur Eingabe von Anmeldungsdaten durch den Nutzer erforderliche Anmeldungsdaten-Eingabeeinrichtung, eines solchen Routers ist beispielsweise vierundzwanzig Stunden am Tag und sieben Tagen in der Woche möglich. Sowohl Service-Mitarbeiter als auch Administratoren können sich daher grundsätzlich jederzeit mit zulässigen Anmeldungsdaten anmelden, insbesondere mit ihren Benutzernamen und jeweils individuellen Passworten, um von extern auf das hinter dem Router liegende Netzwerk zu gelangen, d.h. insbesondere von einem ersten Netzwerkwerk über den an der Außengrenze eines zweiten Netzwerkes eingesetzten Routers in das zweite Netzwerk. Ein solcher Router kann insbesondere auch einzelne Netzbereiche voneinander trennen, bis hin zu kleinsten Netzzellen.

Dies kann jedoch beispielsweise im laufenden Betrieb einer Anlage ein unnötiges Risiko darstellen. Folglich kann es wünschenswert sein, dass zum Beispiel im Fall einer in Betrieb befindlichen Anlage oder einer bestimmten Maschine hiervon, ein Zugriff von außen auf das entsprechende Netzwerk, d.h. insbesondere die Anlage oder bestimmte Maschine betreffende Netzwerk, nicht möglich sein soll oder darf.

Es gibt folglich Konstellationen, bei denen ein Zugriff von außen auf ein Netzwerk nicht möglich sein soll oder darf, auch dann nicht, wenn ein in Betracht kommender Nutzer entsprechend qualifiziert ist und/oder als einziger Nutzer grundsätzlich autorisiert ist und die entsprechend zulässigen Anmeldungsdaten, wie insbesondere Passwort und Benutzernamen, kennt.

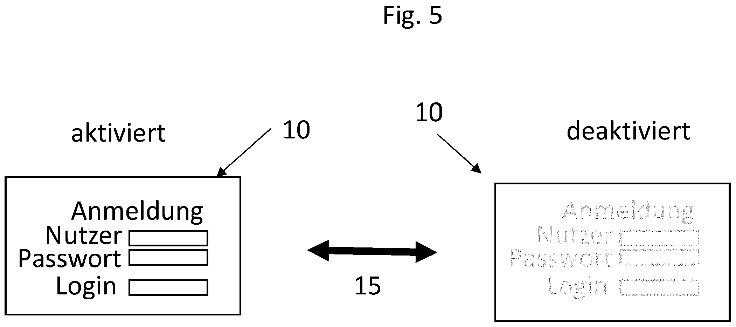

Fig. 5 skizziert für solche Konstellationen in stark vereinfachter Darstellung eine bevorzugte Ausführungsform eines erfindungsgemäßen Zugriffskontrollverfahrens. So ist müssen beispielsweise gemäß linker Darstellung von Fig. 5 für eine durch Anmeldungsdaten geschützte Zugriffsfunktionalität auf vorbestimmte Netzbereiche und/oder an diese angeschaltete Netzgeräte, zur Nutzung der Zugriffsmöglichkeit zunächst Anmeldungsdaten eingegeben und als zulässige Anmeldungsdaten erkannt werden. Das Eingeben dieser Daten erfolgt hierbei gemäß linker Darstellung der Fig. 5 z.B. über einen Desktop oder Browser aufrufbares Anmeldungsmenü 10, wobei im dargestellten Beispiel ein Nutzername und ein Passwort in ein entsprechendes Eingabefeld einzugeben sind und anschließend auf den mit "Login" bezeichneten Button gedrückt werden muss, woraufhin zur Zugriffskontrolle eine Prüfung auf zulässige Anmeldungsdaten eingeleitet wird. In einem, wie in der linken Darstellung der Fig. 5 zu sehenden, aktivierten Zustand können die Anmeldungsdaten eingegeben werden und ist folglich das Eingeben von Anmeldungsdaten freigegeben.

Mit der rechten Darstellung der Fig. 5 ist im Gegensatz hierzu ein deaktivierter Zustand, skizziert. In einem solchen Zustand können keine Anmeldungsdaten eingegeben werden und ist folglich das Eingeben von Anmeldungsdaten gesperrt. Ist für das Eingeben der Anmeldungsdaten beispielsweise gemäß Fig. 5 ein über einen Desktop oder Browser aufrufbares Anmeldungsmenü 10 vorgesehen, kann das Sperren bevorzugt einfach durch Unterbinden einer optischen Anzeige des Anmeldungsmenüs 10 erfolgen, wie mit der rechten Darstellung der Fig. 5 skizziert.

Das Freigeben und/oder Sperren der Eingabe bzw. der Eingabemöglichkeit von Anmeldungsdaten erfolgt hierbei zweckmäßig über eine Aktivierungs-/Deaktivierungseinrichtung, wie nachfolgend näher erläutert, und kann folglich temporär ausgewählt werden, d.h. je nach Bedarf das Eingeben von Anmeldungsdaten temporär freigegebenen werden und/oder temporär gesperrt werden, insbesondere durch einfaches Umschalten zwischen beiden Zuständen, wie durch den mit dem Bezugszeichen 15 gekennzeichneten Doppelpfeil angedeutet. Eine Kontrolle des Zugriffs auf vorbestimmte Netzbereiche und/oder an diese angeschaltete Netzgeräte ist somit jederzeit gegeben.

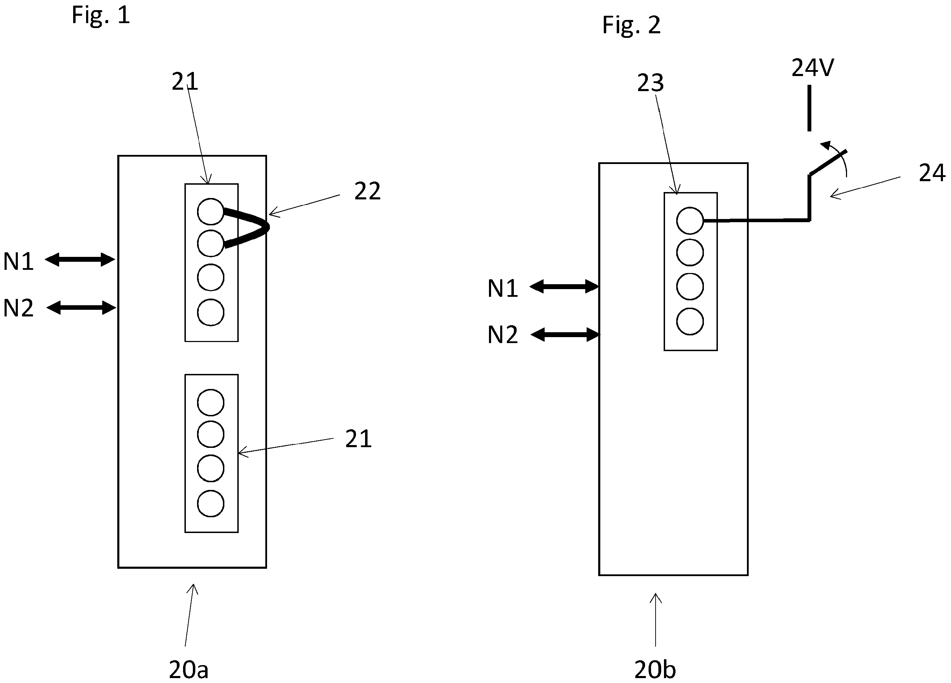

Die Figuren 1 und 2 zeigen in stark schematisierter Darstellung Teilansichten von Routern mit einer jeweiligen bevorzugten, insbesondere in Hardware verwirklichten Ausführungsform einer erfindungsgemäßen Aktivierungs-/Deaktivierungseinrichtung. Skizziert sind an einem jeweiligen Router 20a (Fig. 1) und 20b (Fig. 2) vorhandene Anschlussblöcke 21 bzw. 23. Die Anschlussblöcke 21 und 23 umfassen jeweils eine Anzahl, insbesondere eine Mehrzahl von Eingangsanschlüssen, und in der Regel auch eine Anzahl, insbesondere eine Mehrzahl von Ausgangsanschlüssen. Derartige Ein- und Ausgangsanschlüsse stellen in der Regel digitale Signalanschlüsse bereit und sind dem Fachmann an und für sich bekannt. Der Router 20a bzw. 20b ist jeweils zwischen zwei Netzen geschaltet, wie in den Fign. 1 und 2 mit den mit N1 und N2 belegten Doppelpfeilen angezeigt. Beispielsweise trennt der Router 20a oder 20b jeweils eine bestimmte Netzzelle N1 von einem anderen Netzbereich N2 ab. Die Netzzelle N1 kann z.B. einer bestimmten Produktionszelle eines Anlagennetzwerkes entsprechen, an deren Außengrenze der Router 20a, 20b eingesetzt ist, um einen Zugriff von außerhalb der Netzzelle N1, also insbesondere vom Netz oder Netzbereich N2 kommend, kontrollieren zu können.

Die erste, in Fig. 1 skizzierte Ausführungsformen sieht eine erfindungsgemäße, mit der Anmeldungsfunktionalität zusammenwirkende Aktivierungs-/Deaktivierungseinrichtung am Router derart vor, dass mittels einer Kontaktbrücke 22 zwei vorbestimmte Anschlüsse miteinander und direkt elektrisch verbunden sein müssen, um eine zur Eingabe von Anmeldungsdaten durch den Nutzer erforderliche, jedoch aus Gründen der Übersichtlichkeit in der Fig. nicht dargestellte Anmeldungsdaten-Eingabeeinrichtung zu aktivieren.

Wie aus der vorhergehenden Beschreibung zur Fig. 5 ersichtlich, kann eine solche Anmeldungsdaten-Eingabeeinrichtung z.B. als ein vom Router im Rahmen der Anmeldungsfunktionalität eingerichtetes, über einen Desktop oder Browser aufrufbares Anmeldungsmenü beinhalten. Ist die Kontaktbrücke entfernt, und also eine direkt elektrische Verbindung zwischen den zwei vorbestimmten Anschlüssen nicht vorhanden, ist die Anmeldungsdaten-Eingabeeinrichtung deaktiviert. Jederzeit nach Bedarf ist die Anmeldungsdaten-Eingabeeinrichtung folglich von einem aktivierten Zustand in einen deaktivierten Zustand schaltbar und umgekehrt.

Die zweite, in Fig. 2 skizzierte Ausführungsformen sieht in Abwandlung zur Ausführungsform nach Fig. 1 eine Hardwarelösung vor, bei welcher ein Schalter oder Taster 24 am Router vorgesehen ist, mittels welchem die mit der Anmeldungsfunktionalität zusammenwirkende, jedoch aus Gründen der Übersichtlichkeit in der Fig. nicht dargestellte Anmeldungsdaten-Eingabeeinrichtung temporär aktivierbar und/oder deaktivierbar ist. Der Schalter oder Taster 24 kann bevorzugt als Schlüsselschalter ausgebildet sein, d.h. als elektrischer Schalter, der aus Sicherheitsgründen mit einem Schloss kombiniert ist, so dass der Schaltvorgang nur von einem befugten Personenkreis unter Zuhilfenahme des passenden Schlüssels ausgeführt werde kann. Mit dem Schalter oder Taster 24 kann z.B. ein vorbestimmter Anschluss, insbesondere mit einem digitalen Eingang, zur Eingabe der Anmeldungsdaten zunächst an ein hierzu notwendiges Spannungspotential, z.B.24V, gelegt sein. Zum Sperren der Eingabemöglichkeit von Anmeldungsdaten, d.h. wenn ein Zugriff von außen auf das durch den Router abgegrenzte Netz, z.B. vom Netz N2 kommend auf das Netz N1, nicht möglich sein soll oder darf, kann mittels des Schalters oder Tasters 24 die Verbindung mit zu dem notwendigen Spannungspotential temporär unterbrochen werden.

Möchte demnach z.B. ein Service-Mitarbeiter vom N2 aus auf das Netz N1, z.B. das Netz einer Produktionszelle zugreifen, um dort beispielsweise eine SPS (Speicherprogrammierbare Steuerung) anders zu konfigurieren muss er folglich hierzu zunächst grundsätzliche zulässige Anmeldungsdaten kenn, z.B. seinen Benutzernamen und ein entsprechend zugeordnetes Passwort, um den zwischen den Netzen N1 und N2 angeordneten, insbesondere zum Schutz vor das N2 geschalteten Router 20a oder 20b zu passieren. Der Router 20a oder auch 20b ist somit bevorzugt ein sogenannter Security-Router mit einer Benutzerfirewall. Mit dem erfindungsgemäßen Router, kann nun die Sicherheit dahin erhöht werden, dass die Anmeldung und die damit verbundene Authentifizierung eines grundsätzlich befugten Nutzers nur ermöglicht ist, wenn auch die am Router vorgesehene Aktivierungs-/Deaktivierungseinrichtung entsprechend aktiviert ist, also z.B. ein vorbestimmter digitaler Eingang am Router entsprechend gesetzt ist, z.B. über einen lokalen Schlüsselschalter. Ist die Aktivierungs-/Deaktivierungseinrichtung entsprechend in einem deaktiven Zustand, ist auch ein Anmeldungsversuch beim Router nicht möglich. Beispielsweise kann die Aktivierungs-/Deaktivierungseinrichtung ausgebildet sein, die optische Anzeige eines wie vorstehend aufgezeigtes Anmeldungsmenüs zu unterbinden. So kann ferner insbesondere vorgesehen sein, dass erst ein Mitarbeiter vor Ort die Aktivierungs-/Deaktivierungseinrichtung entsprechend aktivieren muss, d.h. z.B. den Schlüsselschalter in die aktivierende und also die Eingabe von Anmeldungsdaten freigebende Stellung drehen muss. Der Service-Mitarbeiter muss sich somit erst mit dem Mitarbeiter vor Ort besprechen und die "mechanische Freigabe" von diesem zu erhalten.

Das bietet insbesondere den Vorteil, dass ein Nutzer von außen nur in Absprache mit dem Betreiber des Netzes, auf welches der Nutzer von außen zugreifen möchte, agieren kann (4-Augen-Prinzip). Der Betreiber des Netzes behält somit weiterhin die Hoheit über sein durch den erfindungsgemäßen Router nach außen geschütztes Netz.

In Abwandlung zu den Ausführungsformen nach Fig. 1 und 2 kann die Aktivierungs-/Deaktivierungseinrichtung in weiteren bevorzugten Ausführungen im Rahmen der Erfindung auch ganz oder teilweise in Software ausgebildet, z.B. als eine Software basierte HMI-Schaltfläche ausgebildet sein oder eine solche besitzen.

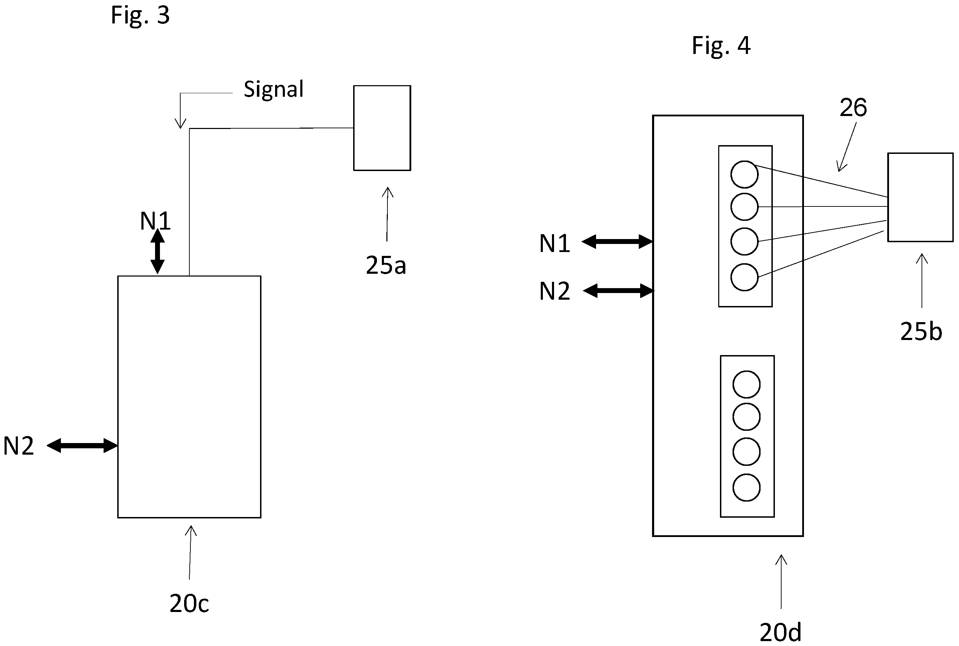

Bei der in Fig. 3 skizzierten Ausführungsformen ist z.B. in einer weiteren zweckmäßigen Abwandlung vorgesehen, dass eine im Rahmen der Erfindung vorgesehene Aktivierungs-/Deaktivierungseinrichtung des Routers 20c eine an diesen angeschaltete, insbesondere über eine Netzverbindung des Netzes N1 angeschaltete Steuerkomponente 25a sowie einen Softwareschalter umfasst, so dass mittels der angeschalteten Steuerkomponente per Steuersignal der Softwareschalter entsprechend einem gewünschten aktivierten Zustand oder deaktivierten Zustand triggerbar ist, d.h. zum Freigeben oder Sperren der Möglichkeit des Eingebens von Anmeldungsdaten.

In weiterer Alternative kann z.B. gemäß einer wie bei Fig. 4 skizzierten Ausführungsformen auch eine über separate bzw. individuelle Signalleitungen 26 an vorbestimmte Anschlüsse eines Routers 20d angeschaltete Steuerkomponente 25b vorgesehen sein, insbesondere um mittels entsprechender Steuersignale die zur Eingabe von Anmeldungsdaten durch den Nutzer erforderliche Anmeldungsdaten-Eingabeeinrichtung temporär zu aktiveren und/oder deaktivieren.

Es sei darauf hingewiesen, dass als Anmeldungsdaten-Eingabeeinrichtung im Rahmen der Erfindung nicht lediglich eine Einrichtung einsetzbar ist, über welche händisch Anmeldungsdaten einzugeben sind. Alternativ können als Anmeldungsdaten-Eingabeeinrichtung im Rahmen der Erfindung auch Einrichtungen eingesetzt werden, mit denen eine automatische oder automatisierte Eingabe von Anmeldungsdaten erfolgt und/oder bei denen die Eingabe von Anmeldungsdaten durch entsprechende Sensoren erfassbar ist, beispielsweise durch Fingerprint-Sensoren.

Ferner ist unabhängig von der jeweiligen Ausführung der Aktivierungs-/Deaktivierungseinrichtung und/oder der Anmeldfunktionalität, die Aktivierungs-/Deaktivierungseinrichtung in Zusammenwirken mit der Anmeldungsfunktionalität jedoch zweckmäßig derart eingerichtet, dass das Bewirken einer Aktivierung und auch das Bewirken einer Deaktivierung der Anmeldungsdaten-Eingabeeinrichtung unabhängig von jeglicher aktivierten oder deaktivierten Kommunikationsverbindung, wie z.B. VPN-Verbindung, ermöglicht ist.

Unter Berücksichtigung vorstehender Beschreibung kann die Lösung nach der Erfindung folglich insbesondere auch in Anwendungen genutzt werden, in denen ein VPN-Tunnel nicht genutzt wird, z.B. bei der Kommunikation aus einem Produktionsnetzbereich in eine einzelne Produktionszelle, und/oder in Anwendungen, wo ein VPN-Tunnel in ein bestimmtes Netz oder in einen bestimmten Netzbereich dauerhaft aufgebaut sein muss, der Zugriff durch den VPN-Tunnel aber nur in Absprache mit dem Betreiber dieses bestimmten Netzes oder Netzbereiches erfolgen soll.

## Patentansprüche

1. Router (20a, 20b, 20c, 20d), der zwischen wenigstens zwei Kommunikations-, Anlagen- und/oder Rechnernetzen (N1, N2) geschaltet ist und mit Anmeldungsfunktionalität ausgestattet und eingerichtet ist, zur Anmeldung eines Nutzers, um diesen nach Eingabe von als zulässig erkannten Anmeldungsdaten Zugriff auf vorbestimmte Netzbereiche und/oder an diese angeschaltete Netzgeräte zu gewähren, **dadurch gekennzeichnet, dass** am Router eine mit der Anmeldungsfunktionalität zusammenwirkende Aktivierungs-/Deaktivierungseinrichtung vorgesehen ist, zum temporären Aktivieren und/oder Deaktivieren einer zur Eingabe von Anmeldungsdaten durch den Nutzer erforderlichen Anmeldungsdaten-Eingabeeinrichtung.

2. Router (20a, 20b, 20c, 20d) nach Anspruch 1, ferner **dadurch gekennzeichnet, dass** im Rahmen der Anmeldungsfunktionalität ein über ein Desktop oder Browser aufrufbares Anmeldungsmenü (10) als Anmeldungsdaten-Eingabeeinrichtung eingerichtet ist.

3. Router (20a, 20b, 20c, 20d) nach Anspruch 2, ferner **dadurch gekennzeichnet, dass** die Aktivierungs-/Deaktivierungseinrichtung ausgebildet ist, zum temporären Deaktivieren eine optische Anzeige des Anmeldungsmenüs (10) zu unterbinden.

4. Router (20a, 20b, 20c, 20d) nach einem der vorstehenden Ansprüche, ferner **dadurch gekennzeichnet, dass** die Anmeldungsfunktionalität bei temporär aktivierter Anmeldungsdaten-Eingabeeinrichtung zur automatisierten Eingabe der Anmeldungsdaten und/oder zum Einlesen der Anmeldungsdaten unter Nutzung von Scann- oder Sensoreinrichtungen eingerichtet ist.

5. Router (20a, 20b, 20c, 20d) nach einem der vorstehenden Ansprüche, ferner **dadurch gekennzeichnet, dass** die Aktivierungs-/Deaktivierungseinrichtung in Hardware- und/oder Software ausgebildet.

6. Router (20a, 20b, 20c, 20d) nach Anspruch 4, ferner **dadurch gekennzeichnet, dass** die Aktivierungs-/Deaktivierungseinrichtung einen Schlüsselschalter (24) oder eine HMI-Schaltfläche besitzt.

7. Router (20a, 20b, 20c, 20d) nach einem der Ansprüche 1 bis 6, ferner **dadurch gekennzeichnet, dass** die Aktivierungs-/Deaktivierungseinrichtung eingerichtet ist, ein zur Eingabe der Anmeldungsdaten notwendiges Spannungspotential temporär zu unterbrechen.

8. Router (20a, 20b, 20c, 20d) nach einem der Ansprüche 1 bis 7, ferner **dadurch gekennzeichnet, dass** die Aktivierungs-/Deaktivierungseinrichtung in Zusammenwirken mit der Anmeldungsfunktionalität zum Bewirken einer Aktivierung und auch Deaktivierung der Anmeldungsdaten-Eingabeeinrichtung, unabhängig von jeglicher aktivierten oder deaktivierten Kommunikationsverbindung, wie z.B. VPN-Verbindung, eingerichtet ist.

9. Zugriffskontrollverfahren, insbesondere für einen Router (20a, 20b, 20c, 20d) nach einem der vorstehenden Ansprüche, für eine durch Anmeldungsdaten geschützte Zugriffsfunktionalität auf vorbestimmte Netzbereiche und/oder an diese angeschaltete Netzgeräte, wobei zur Nutzung der Zugriffsmöglichkeit Anmeldungsdaten eingegeben und als zulässige Anmeldungsdaten erkannt werden müssen, **dadurch gekennzeichnet, dass** zur Kontrolle des Zugriffs das Eingeben von Anmeldungsdaten mittels einer Aktivierungs-/Deaktivierungseinrichtung temporär freigegeben und/oder gesperrt werden kann (15).

10. Zugriffskontrollverfahren nach Anspruch 9, ferner **dadurch gekennzeichnet, dass** das Eingeben der Anmeldungsdaten über ein Desktop oder Browser aufrufbares Anmeldungsmenü (10) erfolgt und durch Unterbinden einer optischen Anzeige des Anmeldungsmenüs (10) gesperrt wird.

11. Zugriffskontrollverfahren nach Anspruch 9 oder 10, ferner **dadurch gekennzeichnet, dass** die Zugriffsfunktionalität eingerichtet ist, zur Eingabe von Anmeldungsdaten zur Gewährung des Zugriffs auf vorbestimmte Netzbereiche und/oder an diese angeschaltete Netzgeräte eine automatisierte Anmeldungsprozedur zu unterstützen und/oder das Einlesen von Anmeldungsdaten unter Nutzung von Scann- oder Sensoreinrichtungen zu unterstützen.

## Claims

1. Router (20a, 20b, 20c, 20d) which is connected between at least two communication, system and/or computer networks (N1. N2) and is equipped with login functionality and configured for logging in a user in order to grant the user access to predetermined network zones and/or network devices connected thereto after inputting login data recognized as permissible, **characterised in that** an activation/deactivation device interacting with the login functionality is provided on the router for temporarily activating and/or deactivating a login data input device required for inputting login data by the user.

2. Router (20a, 20b, 20c, 20d) according to claim 1, further **characterised in that** a login menu (10) which can be called up via a desktop or browser is configured as a login data input device as part of the login functionality.

3. Router (20a, 20b, 20c, 20d) according to claim 2, further **characterised in that** the activation/deactivation device is designed to prevent a visual display of the login menu (10) for temporary deactivation.

4. Router (20a, 20b, 20c, 20d) according to one of the preceding claims, further **characterised in that** the login functionality is configured for automated input of the login data and/or for reading in the login data using scanning or sensor devices when the login data input device is temporarily activated.

5. Router (20a, 20b, 20c, 20d) according to one of the preceding claims, further **characterised in that** the activation/deactivation device is implemented in hardware and/or software.

6. Router (20a, 20b, 20c, 20d) according to claim 4, further **characterised in that** the activation/deactivation device has a key switch (24) or an HMI button.

7. Router (20a. 20b, 20c. 20d) according to one of claims 1 to 6, further **characterised in that** the activation/deactivation device is configured to temporarily interrupt a voltage potential necessary for inputting the login data.

8. Router (20a, 20b, 20c, 20d) according to any one of claims 1 to 7, further **characterised in that** the activation/deactivation device is configured in cooperation with the login functionality to effect activation and also deactivation of the login data input device, independently of any activated or deactivated communication connection, such as VPN connection.

9. Access control method, in particular for a router (20a, 20b, 20c, 20d) according to one of the preceding claims, for an access functionality protected by login data to predetermined network zones and/or network devices connected thereto, wherein login data must be inputted and recognised as permissible login data in order to use the access possibility, **characterised in that**, in order to control the access, the input of login data can be temporarily enabled and/or blocked by means of an activation/deactivation device (15).

10. Access control method according to claim 9, further **characterised in that** the login data is inputted via a login menu (10) which can be called up via a desktop or browser and is blocked by suppressing a visual display of the login menu (10).

11. Access control method according to claim 9 or 10, further **characterised in that** the access functionality is configured to support an automated login procedure for inputting login data for granting access to predetermined network zones and/or network devices connected thereto and/or to support the reading in of login data using scanning or sensor devices.

## Revendications

1. Routeur (20a, 20b, 20c, 20d), lequel est connecté entre au moins deux réseaux de communication, d'installations et/ou d'ordinateurs (N1, N2) et lequel est équipé et conçu avec une fonctionnalité d'inscription, pour inscrire un utilisateur, afin de lui accorder, après la saisie des données d'inscription reconnues comme autorisées, un accès à des zones de réseau prédéterminées et/ou à des appareils de réseau connectés audit réseau, **caractérisé en ce qu'**un système d'activation/désactivation, lequel interagit avec la fonctionnalité d'inscription, est fourni au niveau du routeur pour activer et/ou désactiver temporairement un système de saisie de données d'inscription nécessaire à la saisie des données d'inscription par l'utilisateur.

2. Routeur (20a, 20b, 20c, 20d) selon la revendication 1, **caractérisé en outre en ce que** dans le cadre de la fonctionnalité d'inscription, un menu d'inscription (10) pouvant être appelé par l'intermédiaire d'un bureau ou d'un navigateur, est configuré sous la forme du système de saisie de données d'inscription.

3. Routeur (20a, 20b, 20c, 20d) selon la revendication 2, **caractérisé en outre en ce que** le système d'activation/désactivation est conçu pour désactiver temporairement un affichage visuel du menu d'inscription (10).

4. Routeur (20a, 20b, 20c, 20d) selon l'une quelconque des revendications précédentes, **caractérisé en outre en ce que** la fonctionnalité d'inscription est configurée pour saisir de manière automatisée des données d'inscription et/ou pour lire les données d'inscription à l'aide des systèmes de balayage ou de détection lorsque le système de saisie des données d'inscription est temporairement activé.

5. Routeur (20a, 20b, 20c, 20d) selon l'une quelconque des revendications précédentes, **caractérisé en outre en ce que** le système d'activation/désactivation est conçu sous la forme d'un matériel et/ou d'un logiciel.

6. Routeur (20a, 20b, 20c, 20d) selon la revendication 4, **caractérisé en outre en ce que** le système d'activation/désactivation comporte un interrupteur à clé (24) ou un bouton IHM.

7. Routeur (20a, 20b, 20c, 20d) selon l'une quelconque des revendications 1 à 6, **caractérisé en outre en ce que** le système d'activation/désactivation est conçu pour interrompre temporairement un potentiel de tension nécessaire à la saisie des données d'inscription.

8. Routeur (20a, 20b, 20c, 20d) selon l'une quelconque des revendications 1 à 7, **caractérisé en outre en ce que** le système d'activation/désactivation est conçu, en coopération avec la fonctionnalité d'inscription, pour provoquer l'activation et également la désactivation du système de saisie de données d'inscription, indépendamment de toute connexion de communication activée ou désactivée, telle que, par exemple, une connexion VPN.

9. Procédé de contrôle d'accès, en particulier pour un routeur (20a, 20b, 20c, 20d) selon l'une quelconque des revendications précédentes, pour une fonctionnalité d'accès, protégée par des données d'inscription, à des zones de réseau prédéterminées et/ou à des appareils de réseau connectés audit réseau, dans lequel pour utiliser l'option d'accès, les données d'inscription doivent être saisies et reconnues comme données d'inscription autorisées, **caractérisé en ce que** pour contrôler l'accès, la saisie de données d'inscription peut être temporairement autorisée et/ou bloquée à l'aide d'un système d'activation/désactivation (15).

10. Procédé de contrôle d'accès selon la revendication 9, **caractérisé en outre en ce que** la saisie des données d'inscription est effectuée par l'intermédiaire d'un menu d'inscription (10) pouvant être appelé sur un bureau ou un navigateur et est bloquée par empêchement d'un affichage visuel du menu d'inscription (10).

11. Procédé de contrôle d'accès selon la revendication 9 ou 10, **caractérisé en outre en ce que** la fonctionnalité d'accès est conçue pour saisir des données d'inscription afin d'accorder l'accès à des zones de réseau prédéterminées et/ou à des appareils de réseau connectés audit réseau, pour prendre en charge une procédure d'inscription automatisée et/ou pour prendre en charge la lecture de données d'inscription à l'aide des systèmes de balayage ou de détection.
